(19) Europäisches Patentamt
European Patent Office
Office européen des brevets

(11) Publication number: 0 492 003 A1

(12) # EUROPEAN PATENT APPLICATION

(21) Application number: 90125784.0

(22) Date of filing: 28.12.90

(51) Int. Cl.5: C08G 64/30

(43) Date of publication of application:
01.07.92 Bulletin 92/27

(84) Designated Contracting States:
DE FR GB NL

(71) Applicant: DAICEL CHEMICAL INDUSTRIES, LTD.
1, Teppo-cho
Sakai-shi Osaka(JP)

(72) Inventor: Ueda, Mitsuru
6-11-2 Tohrimachi 5-chome
Yonezawa-shi, Yamagata(JP)
Inventor: Kanno, Tatsuya
500, Kamiyobe, Yobe-ku
Himeji-shi, Hyogo(JP)
Inventor: Iguchi, Yoshihiro
25, Hagiwara,Ibomachi
Tatsuno-shi, Hyogo(JP)
Inventor: Oshino, Yasuhiro
1367, Shinzaike, Aboshi-ku
Himeji-shi, Hyogo(JP)

(74) Representative: Patentanwälte Grünecker, Kinkeldey, Stockmair & Partner
Maximilianstrasse 58
W-8000 München 22(DE)

(54) **Process for the preparation of polycarbonate.**

(57) A polycarbonate is produced by melt-polycondensing a dihydric hydroxy compound and a bisarycarbonate in the presence of 4-(4-methyl-1-piperidinyl)-pyridine or a salt thereof as catalyst.

The process of the invention does not require the use of toxic phosgene and prevents the incorporation of chlorine ions in the resulting polycarbonate.

EP 0 492 003 A1

The present invention relates to a process for preparing a high-molecular weight polycarbonate by melt-polycondensing a dihydric hydroxy compound and a bisaryl carbonate in the presence of a catalyst.

The high-molecular polycarbonate of the present invention is a general purpose engineering thermoplastic which can be used in wide applications, particularly in injection molding or as a glass sheet instead of a window glass.

Interfacial polycondensation is generally effective in producing a polycarbonate, but has drawbacks that toxic phosgene should be used and chloride ions remain in the formed polycarbonate.

In order to eliminate these drawbacks, Japanese Patent Laid-Open No. 182336/1988 discloses production of a polycarbonate through interfacial polycondensation of a particular dihydric alcohol with liquid trichloromethyl chloroformate used instead of toxic phosgene. However, only 9,9-bis-(4-hydroxyphenyl)-fluorene is described as the particular dihydric phenol. Angew. Chem., 99,922(1987) describes that a polycarbonate is prepared from 2,2-bis(4-hydroxyphenyl)propane by making use of triphosgene instead of toxic phosgene. However, it also describes a reaction mechanism by which phosgene is generated.

EP-A-0382250 discloses a process for producing a polycarbonate by melt-polycondensing a dihydric hydroxy compound and a bisarylcarbonate in the presence of a catalyst selected from electron-donating amine compounds and salts thereof. As Catalysts N-N-dimethyl-4-aminopyridine, 4-diethylaminopyridine, 4-pyrrolidinopyridine, 4-(5-quinolyl)-pyridine, 4-aminopyridine, 2-aminopyridine, 2-hydroxypyridine, 2-methoxypyridine, 4-methoxypyridine, 4-hydroxypyridine, 2-dimethylaminoimidazole, 2-methoxyimidazole, 2-mercaptoimidazole, 2-aminopyridine, aminoquinoline, imidazole, 2-methylimidazole, 4-methylimidazole and diazabicyclooctane (DABCO) are disclosed.

These catalysts are, however, distilled in a large amount together with phenol and provide a product with a low number-average molecular weight.

It is therefore the object of the present invention to provide a process for producing a polycarbonate wherein the distilled amount of catalyst is decreased and wherein a product with a high number-average molecular weight is obtained.

Said object is achieved by a process for producing a polycarbonate by melt-polycondensing a dihydric hydroxy compound and a bisarylcarbonate in the presence of a catalyst characterized in that 4-(4-methyl-1-piperidinyl)-pyridine or a salt thereof is used as catalyst.

According to the process of the present invention it is possible to produce, without resorting to toxic phosgene, a high-molecular weight colorless transparent polycarbonate which is substantially free of chlorine ions. Furthermore, the amount of catalyst distilled can be reduced.

According to one embodiment of the process according to the invention, the catalyst is selected among salts (excluding chlorides) of 4-(4-methyl-1-piperidinyl)-pyridine.

According to another preferred embodiment, the dihydric hydroxy compound is a dihydric phenol and the bisaryl carbonate is selected from the group consisting of (B) bisphenol carbonate, (C) bis(2,4,6-trichlorophenyl)carbonate, (D) bis(2,4-dichlorophenyl)carbonate and (E) bis-(2-cyanophenyl)carbonate.

Preferably, the dihydric hydroxy compound is selected from dihydric phenols represented by any of the following formulae (I), (II), (III) and (IV):

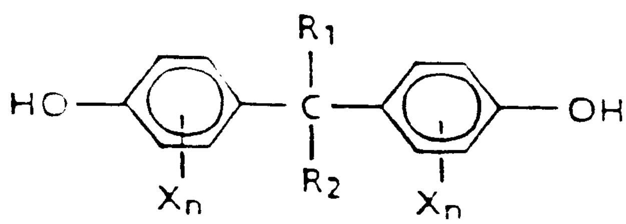

(I)

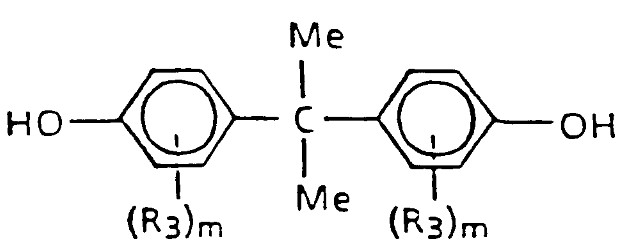

(II)

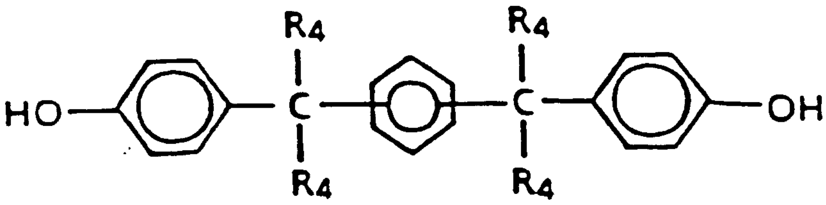

(III)

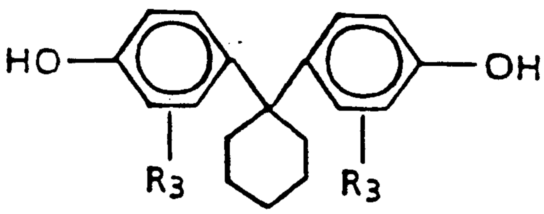

(IV)

wherein $R_1$, $R_2$, $R_3$ and $R_4$ are each hydrogen, a straight chain or branched alkyl group having 1 to 8 carbon atoms, or a phenyl group, X is a halogen atom, n is 0 to 4, and m is 1 to 4.

In the present invention, the catalyst can be used in the form of a salt in which the counter ion is an acid including, for example, carbonic acid, acetic acid, formic acid, nitric acid, nitrous acid, oxalic acid, sulfuric acid, phosphoric acid, fluoroboric acid, and hydroboric acid.

Representative examples of the dihydric phenol include the following compounds. Examples of the bisphenol represented by the general formula (I) include 2,2-bis-(4-hydroxyphenyl)propane, 2,2-bis-(4-hydroxyphenyl)butane, 2,2-bis-(4-hydroxyphenyl)-4-methylpentane, 2,2-bis-(4-hydroxyphenyl)octane, 4,4'-dihydroxy-2,2,2-triphenylethane, and 2,2-bis-(3,5-dibromo-4-hydroxyphenyl)propane. Examples of the bisphenol represented by the general formula (II) include 2,2-bis-(4-hydroxy-3-methylphenyl)propane, 2,2-bis-(4-hydroxy-3-isopropylphenyl)propane, 2,2-bis-(4-hydroxy-3-secbutylphenyl)propane, 2,2-bis-(3,5-dimethyl)-4-hydroxyphenyl)propane, and 2,2-bis-(4-hydroxy-3-tertbutylphenyl)propane. Examples of the bisphenol represented by the general formula (III) include 1,1'-bis-(4-hydroxyphenyl)-p-diisopropylbenzene, and 1,1'-bis-(4-hydroxyphenyl)-m-diisopropylbenzene. Examples of the bisphenol represented by the general formula (IV) include 1,1-bis(4-hydroxyphenyl)cyclohexane.

Further, it is also possible to prepare a polycarbonate copolymer through a combination of at least two dihydric hydroxy compounds, e.g. a combination of phenols selected from those represented by the general formulae (I), (II), (III), and (IV).

The method according to the present invention can be practiced by melt-polycondensing a dihydric hydroxy compound, such as bisphenol A, with a bisaryl carbonate, such as bisphenyl carbonate, in the presence of the catalyst.

This reaction is generally conducted at a temperature in the range of 100 to 300°C, preferably at 130 to 280°C. When the temperature is below 130°C, the reaction rate is reduced, while when the temperature exceeds 280°C, side reactions tend to occur.

The catalyst is generally used in an amount of $10^{-1}$ to $10^{-5}$ mole, preferably $10^{-2}$ to $10^{-4}$ mole, based on 1 mole of the dihydric hydroxy compound present in the reaction system. When the amount is less than $10^{-5}$ mole, the rate of polymerization of polycarbonate is reduced because of poor catalytic action. On the other hand, when the amount is more than $10^{-1}$ mole, the proportion of the catalyst remaining in the resultant polycarbonate is increased, which brings about a lowering in the properties of the polycarbonate.

The bisaryl carbonate should be used in an equimolar amount to the dihydric hydroxy compound. In general, in order to form a high-molecular polycarbonate, 1 mole of a carbonate compound should be reacted with 1 mole of a dihydric hydroxy compound.

When bisphenyl carbonate is used, 2 mole of phenol is formed by the above-described reaction. The 2 mole of phenol thus formed is distilled away outside the reaction system.

When the bisaryl carbonate is one of (C), (D) and (E), it is preferable that m is 1 in the forming (II). When the reaction is conducted at a temperature ranging from 130 to 250°C, the amount of catalyst ranges from $10^{-1}$ to $10^{-3}$ mole.

The present invention will now be described by way of examples.

Example 1

22.8 g (0.1 mol) of 2,2-bis (4-hydroxyphenyl)propane was mixed with 0.0176 g (1 x $10^{-4}$ mol) of 4-(4-methyl-1-piperidinyl)-pyridine and 21.4 g (0.1 mol) of bisphenyl carbonate, and the mixture was stirred at 180°C for 1 h in a nitrogen atmosphere. The temperature of the system was raised while gradually evacuating the system. Finally, polycondensation was conducted at 270°C and 0.1 Torr for 1 h and the formed phenol was distilled away to prepare a clear polycarbonate. The viscosity-average molecular weight ($\overline{M}v$) was determined to be 30,000. The glass transition temperature was 150°C.

The viscosity-average molecular weight was determined by measuring the intrinsic viscosity [$\eta$] of the polymer in the form of a methylene chloride solution at 20°C with an Ubbelohde's viscometer and calculating the viscosity-average molecular weight ($\overline{M}v$) according to the following equation:

$$[\eta] = 1.11 \times 10^{-4} (\overline{M}v)^{0.82}$$

Example 2

0.0236 g (1 x $10^{-4}$ mol) of the carbonate of 4-(4-methyl-1-piperidinyl)-pyridine was added under the same conditions as in Example 1. The mixture was stirred for 2 h in a nitrogen atmosphere, and polycondensation was conducted in the same manner as in Example 1 to prepare a clear polycarbonate. The viscosity-average molecular weight ($\overline{M}v$) was determined to be 28,000. The glass transition temperature was 150°C.

Example 3

11.4 g (50 % by mole) of 2,2-bis(4-hydroxyphenyl)propane, 17.0 g (50 % by mole) of 2,2-bis(4-hydroxy-3-tertbutylphenyl)propane, and 0.176 g ($10^{-3}$ mol) of 4-(4-methyl-1-piperidinyl)-pyridinewere stirred for 2 h in a nitrogen atmosphere, and polycondensation was conducted in the same manner as in Example 1 to prepare a clear polycarbonate. The viscosity-average molecular weight ($\overline{M}v$) was determined to be 26,500 and the glass transition temperature was 128°C.

Comparative Example 1

The same treatment as in Example 1 was conducted by using pyridine instead of 4-(4-methyl-1-piperidinyl)-pyridine under the same conditions as in Example 1. However, the viscosity-average molecular weight ($\overline{M}v$) of the resultant polycarbonate was as low as 4,000, which is unsuitable for practical use although it was in the form of polycarbonate.

Example 4

42.09 g (0.1 mol) of bis(2,4,6-trichlorophenyl)carbonate was added to 22.8 g (0.1 mol) of 2,2-bis(4-hydroxyphenyl) propane and 0.176 g [$10^{-2}$ mole based on 2,2-bis(4-hydroxyphenyl)propane] of 4-(4-methyl-1-piperidinyl)-pyridine, and the mixture was stirred at 160°C for 1 h in a nitrogen atmosphere. The temperature of the system was raised while gradually evacuating the system. Finally, polycondensation was conducted at 230°C and 0.1 Torr for 1 h and the formed 2,4,6-trichlorophenol was distilled away to prepare a clear polycarbonate. The viscosity-average molecular weight ($\overline{M}v$) was determined to be 29,000. The glass transition temperature was 150°C.

The viscosity-average molecular weight was determined by measuring the intrinsic viscosity [$\eta$] of the polymer in the form of a methylene chloride solution at 20°C with an Ubbelohdès viscometer and calculating the viscosity-average molecular weight ($\overline{M}v$) according to the following equation:

$$[\eta] = 1.11 \times 10^{-4} (Mv)^{0.82}$$

Example 5

0.0236 g [$10^{-4}$ mole based on 2,2-bis(4-hydroxyphenyl) propane] of the carbonate of 4-(4-methyl-1-piperidinyl)-pyridine was added under the same condition as in Example 4. The mixture was stirred for 2 h in a nitrogen atmosphere, and poylcondensation was conducted in the same manner as in Example 1 to prepare a clear polycarbonate. The viscosity-average molecular weight ($\overline{M}v$) was determined to be 28,000. The glass transition temperature was 150°C.

## Claims

1. A process for producing a polycarbonate by melt-polycondensing a dihydric hydroxy compound and a bisarylcarbonate in the presence of a catalyst characterized in that 4-(4-methyl-1-piperidinyl)-pyridine or a salt thereof is used as catalyst.

2. The process of claim 1, in which the catalyst is the salt.

3. The process of claim 1, in which the dihydric hydroxy compound is a dihydric phenol and the bisarylcarbonate is selected from bisphenyl carbonate, bis(2,4,6-trichlorophenyl)carbonate, bis(2,4-dichlorophenyl) carbonate and bis(2-cyanophenyl)carbonate.

4. The process of any of claims 1 to 3, in which the dihydric hydroxy compound is selected from dihydric phenols represented by any of the following formulas (I), (II), (III) and (IV)

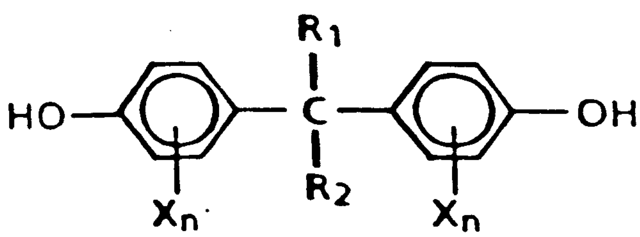

(I)

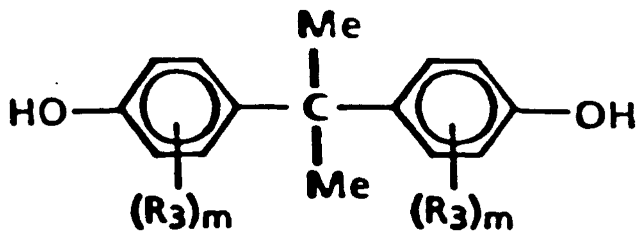

(II)

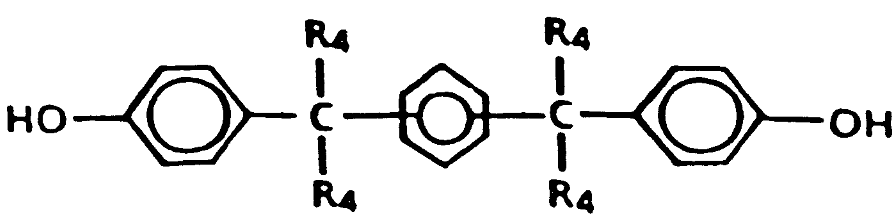

(III)

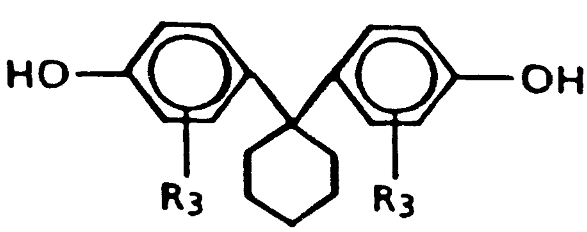

(IV)

wherein $R_1$, $R_2$, $R_3$ and $R_4$ each represents hydrogen, a straight chain or branched alkyl group having 1-8 carbon atoms, or a phenyl group; X represents a halogen atom; n is 0-4 and m is 1-4.

**5.** The process of any of claims 1-4, in which the catalyst is present in an amount of $10^{-1}$ to $10^{-5}$ mole per 1 mole of the dihydric hydroxy compound.

**6.** The process of any of claims 1-5, in which the catalyst is present in an amount of $10^{-2}$ to $10^{-4}$ mole per 1 mole of the dihydric hydroxy compound.

**7.** The process of any of claims 1-6, in which two or more dihydric hydroxy compounds are used to form a polycarbonate copolymer.

European Patent Office

# EUROPEAN SEARCH REPORT

Application Number

EP 90 12 5784

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0382250 (DAICEL CHEMICAL INDUSTRIES, LTD.) * claims 1-7 * --- | 1-7 | C08G64/30 |
| A | PATENT ABSTRACTS OF JAPAN vol. 12, no. 482 (C-553)(3329) 15 December 1988, & JP-A-63 199728 (DAICEL CHEM IND LTD) 18 August 1988, * the whole document * ----- | 1, 4, 7 | |

| TECHNICAL FIELDS SEARCHED (Int. Cl.5 ) |
|---|
| C08G |

The present search report has been drawn up for all claims

| Place of search | Date of completion of the search | Examiner |
|---|---|---|
| THE HAGUE | 09 AUGUST 1991 | MIAO K.Y.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)